# NEUE EUROPÄISCHE PATENTSCHRIFT

(11) **EP 1 255 972 B2**
(45) Veröffentlichungstag und Bekanntmachung des Hinweises auf die Entscheidung über den Einspruch: **05.09.2012**
(45) Hinweis auf die Patenterteilung: 07.09.2005
(21) Anmeldenummer: 01923734.6
(22) Anmeldetag: 24.04.2001
(51) Int. Cl.: G01K 7/18, H01C 17/28

(54) **TEMPERATURMESSFÜHLER UND VERFAHREN ZUR KONTAKTIERUNG EINES TEMPERATURMESSFÜHLERS**
TEMPERATURE SENSOR AND A METHOD FOR BONDING A TEMPERATURE SENSOR
SONDE DE TEMPÉRATURE ET PROCÉDÉ POUR LA MISE EN CONTACT D'UNE SONDE DE TEMPÉRATURE

(30) Priorität: 28.04.2000 DE 10020931
(43) Veröffentlichungstag der Anmeldung: 13.11.2002
(73) Patentinhaber: Zitzmann, Heinrich, 91207 Lauf an der Pegnitz (DE); Bernitz, Georg, 90455 Nürnberg (DE)
(72) Erfinder: Zitzmann, Heinrich, 91207 Lauf an der Pegnitz (DE); Bernitz, Georg, 90455 Nürnberg (DE)
(74) Vertreter: Bergmeier, Werner
(86) Internationale Anmeldenummer: PCT/EP2001/004617
(87) Internationale Veröffentlichungsnummer: WO 2001/084100

(56) Entgegenhaltungen:
- DD-A- 289 127
- DD-A- 298 127
- DD-A5- 289 127
- DE-A- 19 605 468
- DE-A1- 2 615 473
- DE-A1- 4 036 109
- DE-A1- 19 605 468
- JP-A- 02 087 030
- JP-A- 02 269 923
- JP-A- 02 304 319
- JP-A- 07 248 265
- 'Heraeus Broschuere PTM-W2', Juni 1984
- 'Heraeus-Broschuere', März 1988
- 'ABB-Broschuere "Sensycon-Temperatursensoren"', 1999
- Eidesstattliche Versicherung von Hernn karlheinz Eckert
- Rechnung Nr. 05459523 von Heraeus Sensor-nite Gmbh (30.06.1998) und vorausgegangener Schriftwechsel mit B+B Thermo technik Gmbh
- Rechnung Nr. 05459250 von Heraeus Sensor-Nite Gmbh (29.05.1998) und vorausgegangener Schriftwechsel mit Cooper Tools Gmbh
- 'Technisches Datenblatt HSG-W2.1 Heraeus Sensor Gmbh', Januar 1992
- Verkaustechnische Unterlagen von Dr. Wienand, Heraeus Sensor Gmbh (08.07.1993)
- SENSORMAGAZIN 26 September 1986,
- Versandschein und Angebot der Firma Elsag Bailey, Hartmann & Braun, and Cooper Tools Gmbh (25.09.1997 und 29.09.1997)
- Bestellung bei ABB Automation Products Gmbh / Elsag Bailey, Hartmann & Braun, seitens Diehl Controls Nürnberg Gmbh & Co.KG (02.12.1999)
- 'Heraeus-Broschuere PTNM-A', 1983

## Beschreibung

Die vorliegende Erfindung bezieht sich auf einen Temperaturmeßfühler und auf ein Verfahren zur Kontaktierung eines Anschlußdrahtes an einer Kontaktstelle des Temperaturmeßfühlers.

Temperaturmeßfühler werden seit vielen Jahren in der Dünnschichttechnik in unterschiedlichen Ausführungsformen hergestellt und für präzise Temperaturmeßaufgaben verwendet.

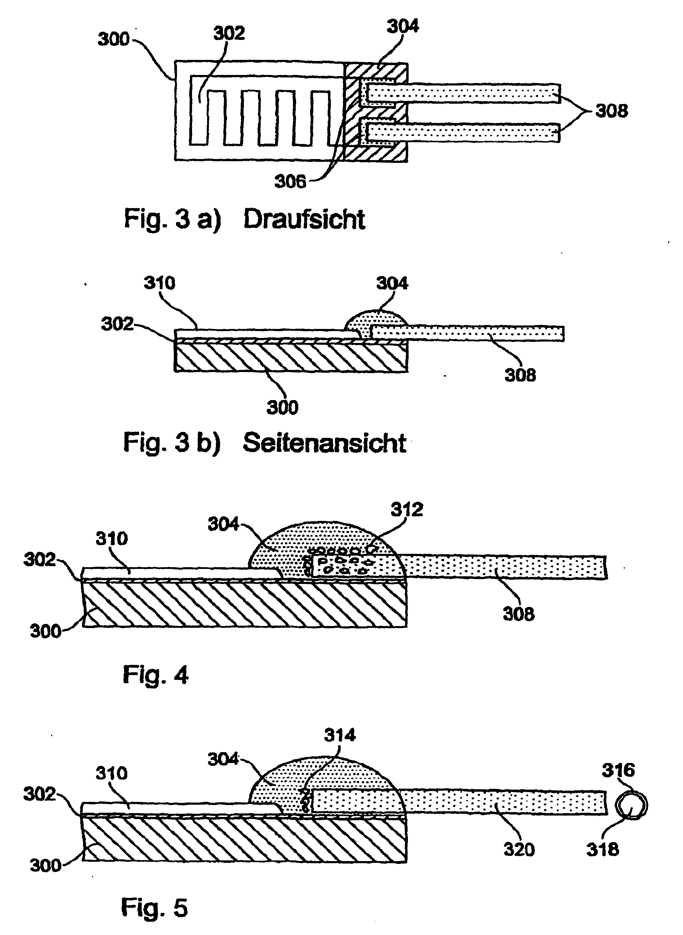

Ein bekannter Temperaturmeßfühler ist in Figur 3 gezeigt. Auf einem Al₂O₃-Keramikträger 300 ist ein Platinfilm 302 von ca. 1 µm Dicke aufgebracht. Dieser Platinfilm 302 ist derart strukturiert, daß dieser eine Widerstandsbahn von z.B. 100 Ω aufweist. Zum Schutz des Platinfilms 302 ist diese mit einer geeigneten Schutzschicht 310 überzogen. An zwei Kontaktflächen 306 sind nun die Anschlußdrähte 308 angeschweißt. Um eine mechanische Belastung der Anschlußdrähte 308 zu gewährleisten, wird eine Fixierungsglasur 304 aufgebracht, um die Anschlußdrähte 302 weiter mechanisch zu fixieren. Die Fixierungsglasur 304 wird bei Temperaturen um ca. 800 °C eingebrannt (Glasur muß schmelzen), um eine Einsatztemperatur bis 600 °C zu gewährleisten (Glasur darf nicht erweichen).

Bei bekannten Temperaturmeßfühlern werden für die Anschlußdrähte 308 aufgrund der hohen Einbrenntemperatur Anschlußdrähte aus Edelmetall (z.B. Platin oder Palladium) oder Edelmetall-Legierungen (z.B. Gold, Palladium) oder Drähte mit ausreichend dickem Edelmetallüberzug (z.B. Nickel mit Platinüberzug) verwendet. Bei einigen Temperaturmeßfühlern werden ferner Silberdrähte oder Drähte aus einer Silber-Palladium-Legierung verwendet. Diese Edelmetalldrähte sind jedoch relativ teuer und daher ist es wünschenswert hierfür kostengünstigere Drähte zu verwenden. Diese können beispielsweise aus Nickel oder Nickellegierungen bestehen. Nickeldrähte weisen sehr gute mechanische Eigenschaften auf und lassen sich sehr gut mit notwendigen Drahtverlängerungen verschweißen. Zudem weisen Nickeldrähte eine sehr hohe Dauereinsatztemperatur von bis ca. 600 °C auf, die deutlich höher als die von Silber (400 °C) ist.

Der Nachteil von Nickeldrähten besteht darin, daß das Nickel beim Einbrennvorgang des Fixierungsglasurtropfens zur Drahtfixierung chemisch mit der Fixierungsglasurmasse des Fixierungstropfens reagiert, wenn während des Einbrennvorgangs die Schmelzphase erreicht wird. Aufgrund dieser chemischen Reaktion entstehen, wie in Fig. 4 gezeigt ist, in der Glasurmasse, die die Anschlußdrähte 308 an den Kontaktflächen 306 des Sensorchips umgibt, viele kleine Bläßchen 312 im Benetzungsbereich zur Drahtoberfläche. Diese Bläßchen 312 vermindern die Fixierungsqualität, d.h. die maximal zulässigen Auszugskräfte an den Anschlußdrähten 308 werden dadurch deutlich verringert. Vor allem beim Einbrennen in einer Schutzgasatmosphäre (z.B. Formiergas N₂/H₂, 95:5) tritt diese Problematik verstärkt auf.

Ein weiteres Problem bei einem Einbrennvorgang an normaler Luft ist, daß nach dem Einbrand an den Nickeldraht-Enden eine Oxidschicht entfernt werden muß, damit eine zuverlässige Kontaktierung mit dem Meßkabel möglich ist.

Auch bei den oben beschriebenen, mit einem Edelmetall ummantelten Nickeldrähten treten solche Probleme auf, wie in Fig. 5 gezeigt ist. Diese Drähte haben an den Stirnflächen (Schnittflächen) keinen Platinüberzug 316, so daß an diesem Drahtende unter der Fixierungsglasur 304 nach dem Einbrand Bläßchen 314 vorliegen.

Die DD 289 127 A5 beschreibt einen Platindünnschichtsensor, bestehend aus einem keramischen Substrat, einer Platindünnschicht sowie zwei Kontaktflächen. Um einen hohen Verbund mit dem Substrat, den Kontaktflächen und den Anschlußdrähten oder eine hohe mechanische Festigkeit der Verbindung bei Zug-Druck- und Scherkräften sowie bei extremen Temperaturwechsel zu erreichen, sind die aus Platin- und Silberlegierungen bestehenden Anschlußdrähte in eine Verbundglasur mit einer hohen Festigkeit und einem niedrigen Ausdehnungskoeffizienten eingebettet.

Die DE 196 05 468 C2 beschreibt einen Platintemperatursensor, der ein isolierendes Substrat aufweist. Auf dem Substrat ist eine Platinfilmschaltung und eine wärmeerzeugungsvorrichtung angeordnet. An der Platinfilmschaltung ist eine Beschichtung angeordnet, welche eine geringere thermische Leitfähigkeit aufweist, als das isolierende Substrat. Anschlußdrähte sind elektrisch mit dem Substrat verbunden und mittels einer Glasur an derselben befestigt.

Die Aufgabe der vorliegenden Erfindung besteht darin ein Verfahren zur Kontaktierung eines Temperaturmeßfühlers und einen Temperaturmeßfühler mit kostengünstigen Anschlußdrähten bei einer erhöhten Fixierungsqualität zu schaffen.

Diese Aufgabe wird durch ein Verfahren gemäß Anspruch 1 oder 2 und einen Temperaturmeßfühler gemäß Anspruch 6 gelöst.

Die vorliegende Erfindung schafft ein Verfahren zur Kontaktierung eines Temperaturmeßfühlers, bei dem ein Anschlußdraht an einer Kontaktstelle des Temperaturmeßfühlers befestigt wird, der befestigte Anschlußdraht oxidiert wird und der Anschlußdraht mittels einer Fixierungsglasur fixiert wird.

Ferner schafft die vorliegende Erfindung einen Temperaturmeßfühler mit einer Widerstandsschicht und einem Anschlußdraht, der mit einer Kontaktstelle des Temperaturmeßfühlers verbunden ist und mit einer Fixierungsglasur befestigt ist, wobei der Anschlußdraht zumindest im Bereich der Fixierungsglasur eine Oxidschicht aufweist.

Bei einem bevorzugten Ausführungsbeispiel besteht der Anschlußdraht aus Nickel, einer Nickellegierung (z. B. NiCr) oder aus einem Nickeldraht mit Platinüberzug, wobei der Platinüberzug z.B. an den Stirnflächen und an Fehlstellen nicht vollständig geschlossen ist.

Der vorliegenden Erfindung liegt die Erkenntnis zugrunde, daß die zur Fixierung verwendete Glasur mit der Oxidschicht beim Schmelzen nicht reagiert, so daß die im Stand der Technik auftretenden Probleme bei der Verwendung von z. B. Nickeldrähten dadurch vermieden werden können, daß diese nach dem Verbinden und vor dem Fixieren oxidiert werden. Hierdurch wird vermieden, daß sich an der Schnittfläche zwischen Draht und Fixierungsglasur Inhomogenitäten, z. B. in der Form von Bläßchen, bilden, wodurch trotz der kostengünstigen Materialien des Drahtes eine hohe Fixierungsqualität erreicht wird. Der Anschlußdraht ist aus einem Material, das beim Fixieren mit der Fixierungsglasur derart reagiert, daß sich an der Schnittstelle zwischen dem Anschlußdraht und der Fixierungsglasur Bläßchen bilden.

Ein Vorteil der vorliegenden Erfindung besteht darin, daß durch das Oxidieren des Nickeldrahts eine festere Verankerung des oxidierten Nickeldrahts mit der Glasur erreicht wird, als das bei der Verwendung von Edelmetalldrähten der Fall ist.

Ein weiterer Vorteil der vorliegenden Erfindung besteht darin, daß die vorzugsweise verwendeten Nickeldrähte sich gut mit Drahtverlängerungen zur Meßschaltung verschweißen lassen.

Wiederum ein weiterer Vorteil besteht darin, daß die Dauereinsatztemperatur von Nickel oder Nickellegierungen hoch ist (600 °C), sogar höher als die von Silber (400 °C), und Nickel gute mechanische Eigenschaften aufweist.

Bevorzugte Weiterbildungen der vorliegenden Erfindung sind in den Unteransprüchen definiert.

Bevorzugte Ausführungsbeispiele der vorliegenden Erfindung werden nachfolgend unter Bezugnahme auf die beigefügten Zeichnungen näher erläutert. Es zeigen:
- Fig.1: eine Darstellung eines kontaktierten Nickeldrahtes an einem Temperaturmeßfühler gemäß einem ersten Ausführungsbeispiel.
- Fig.2: eine Darstellung eines kontaktierten Nickeldrahtes mit Platinmantel gemäß einem zweiten Ausführungsbeispiel.
- Fig.3a: eine Draufsicht eines bekannten Temperaturmeßfühlers.
- Fig.3b: eine Seitenansicht des bekannten Temperaturmeßfühlers aus Fig. 3a.
- Fig.4: eine Darstellung eines kontaktierten Nickeldrahtes, bei dem sich aufgrund chemischer Reaktion in der Glasurmasse im Benetzungsbereich zur Drahtoberfläche kleine Bläßchen befinden.
- Fig.5: eine Darstellung eines kontaktierten Nickeldrahtes mit Platinmantel, bei dem sich aufgrund chemischer Reaktion in der Glasurmasse im Benetzungsbereich zur Drahtoberfläche kleine Bläßchen befinden.

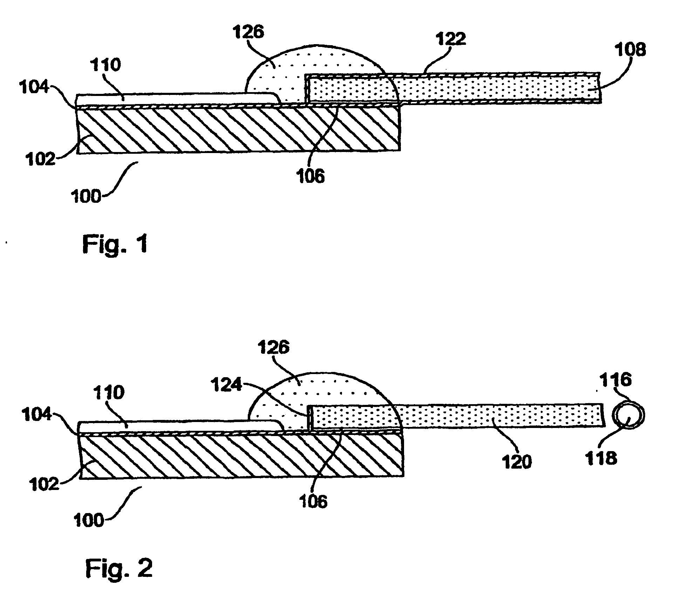

In Fig.1 ist ein erstes bevorzugtes Ausführungsbeispiel der vorliegenden Erfindung gezeigt. Ein Temperaturmeßfühler 100 umfaßt ein Substrat 102, auf dem eine Platinwiderstandschicht 104 gebildet ist, der mit einer Anschlußfläche oder Kontaktstelle 106 verbunden ist, über die elektrische Signale zu bzw. von der Platinschicht geführt werden. Ein Nickeldraht 108 ist mit der Kontaktstelle 106 (z. B. durch Bonden) elektrisch verbunden. Anders als bei bekannten Fühlern wird nun jedoch nicht eine Fixierungsglasur 126 aufgebracht, sondern der aufgebrachte Nickeldraht 108 wird in einem weiteren Schritt oberflächlich oxidiert, z. B. indem der Nickeldraht 108 (samt Chip) für ca. 30 Minuten einer Temperatur von ca. 800 °C in normaler Atmosphäre ausgesetzt wird. Dadurch wird der Nickeldraht 108 mit einer dünnen Oxidschicht 122 überzogen. Anschließend wird nun die Fixierungsglasur 126 aufgebracht und bei 800 °C eingebrannt, so daß sich die in Fig.1 gezeigte Struktur ergibt. Die Oxidschicht 122 bewirkt, daß eine Reaktion des Nickels mit der Glasurmasse während des Schmelzvorgangs unterbunden wird. Die Bläßchenbildung tritt nun nicht mehr auf und die Auszugskraft des Nickeldrahts 108 wird deutlich erhöht. Die Oxidschicht 122 verbindet sich gut mit der umgebenden Glasur, so daß die Verankerung des oxidierten Nickeldrahtes 108 mit der Glasur sogar fester ist als im Fall der Edelmetalldrähte.

Die Oxidschicht 122 auf der Oberfläche des Nickeldrahtes 108 ist jedoch auf der gesamten Länge gebildet, ist aber am Drahtende, wo die elektrische Verbindung (Schweißen, (Hart-)Löten oder Krimpen) zu einem Meßkabel erfolgen soll, störend. Deshalb werden nach dem Einbrand der Fixierungsglasur 126 die Sensorelemente in einem zusätzlichen Schritt einem Reduktionsprozeß unterzogen, in welchem der freiliegenden Nickeloxidschicht der Sauerstoff wieder entzogen wird und schließlich wieder ein blanker Nickeldraht vorliegt. Dieser Reduktionsvorgang kann z.B. in einer N₂/H₂-Atmosphäre bei ca. 600 °C erfolgen. Da die Anschlußfläche 106 und der Nickeldraht 108 in diesem Bereich durch die Fixierungsmasse bedeckt sind, wird die vorher erreichte hohe Auszugskraft der Drähte hierbei nicht vermindert.

Die Reduktion in N₂/H₂-Atmosphäre hat für diejenigen Anwendungsfälle, in welchen eine Verzinnung der Drahtenden gewünscht wird, den Vorteil, daß sich die Nickeldrähte unmittelbar nach der Reduktion gut verzinnen lassen.

Eine weitere Möglichkeit, die Drähte 108, 120 von der Oxidschicht 122, 124 zu befreien, ist eine mechanische Reinigung, z.B. Sandstrahlen.

In Fig.2 ist ein zweites bevorzugtes Ausführungsbeispiel der vorliegenden Erfindung gezeigt. Gegenüber dem in Fig. 1 gezeigten Ausführungsbeispiel unterscheidet sich das in Fig. 2 gezeigte Ausführungsbeispiel dadurch, daß der Anschlußdraht 120 ein Nickeldraht 118 mit Platinüberzug 116 ist. Da der Anschlußdraht 120 an der Stirnfläche (Schnittfläche) keinen Platinüberzug 116 aufweist, wird der Anschlußdraht 120 nach dem Aufschweißen (Bonden) an der Anschlußfläche 106 oxidiert Nachfolgend wird die Fixierungsglasur 126 aufgebracht und eingebrannt. Durch diese Oxidation wird eine Blasenbildung an den Stirnflächen des Anschlußdrahtes 120 vermieden, wodurch eine Verbesserung der Anschlußdrahtfixierung erreicht wird.

Die Oxidschicht 124 auf der Nickelfläche des Anschlußdrahtes kann anschließend durch eine Reduktionsbehandlung entfernt werden, wodurch die Verzinnbarkeit (Benetzung) verbessert wird, obwohl dies wegen des Platinmantels nicht unbedingt erforderlich ist.

Anhand der Fig.1 und 2 wurden bevorzugte Ausführungsbeispiele der vorliegenden Erfindung näher beschrieben, wobei die vorliegende Erfindung nicht auf die Ausführungsbeispiele beschränkt ist.

Ferner kann die Fixierungsglasur, je nach Schmelzbereich der verwendeten Glasur, in einem Temperaturbereich zwischen 500°C und 1000°C eingebrannt werden.

Der Nickeldraht kann ferner in einem Temperaturbereich zwischen 600°C und 900°C innerhalb einer Dauer von 5 Minuten bis 60 Minuten oxidiert werden.

## Patentansprüche

1. Verfahren zur Kontaktierung eines Temperaturmeßfühlers (100), mit folgenden Schritten:
Befestigen eines Anschlußdrahtes (108) aus Nickel oder einer Nickellegierung an einer Kontaktstelle (106) des Temperaturmeßfühlers (100);
in einem weiteren Schritt oberflächliches Oxidieren des befestigten Anschlußdrahtes (108); und
anschließendes Fixieren des Anschlußdrahtes (108) mittels einer Fixierungsglasur (126), wobei der an der Kontaktstelle (106) befestigte Abschnitt des oxidierten Anschlußdrahts (108) durch die Fixierungsglasur (126) bedeckt wird.

2. Verfahren zur Kontaktierung eines Temperaturmeßfühlers (100), mit folgenden Schritten:
Befestigen eines Anschlußdrahtes (120) an einer Kontaktstelle (106) des Temperaturmeßfühlers (100), wobei der Anschlußdraht (120) aus mit einer Edelmetallschicht (116) ummantelten Nickel oder aus einer mit einer Edelmetallschicht (116) ummantelten Nickellegierung besteht, wobei das Nickel oder die Nickellegierung an einer Stirnfläche des Anschlußdrahts (120) freiliegt;
in einem weiteren Schritt oberflächliches Oxidieren der freiliegenden Stirnfläche des befestigten Anschlußdrahtes (108, 120); und
anschließendes Fixieren des Anschlußdrahtes (120) mittels einer Fixierungsglasur (126), wobei die oxidierte Stirnfläche des Anschlußdrahts (120) von der Fixierungsglasur bedeckt wird.

3. Verfahren gemäß Anspruch 2, bei dem der Anschlußdraht (120) aus Nickel und die Edelmetallschicht (116) aus Platin ist.

4. Verfahren gemäß Anspruch 1, bei dem der Nickeldraht (108) in einem Temperaturbereich von 600°C bis 900°C während einer Dauer von 5 Minuten bis 60 Minuten oxidiert wird.

5. Verfahren gemäß einem der Ansprüche 1 bis 4, mit folgendem Schritt:
Entfernen der Oxidschicht (122, 124) von dem Ende des Anschlußdrahtes (108, 120), das von dem Temperaturmeßfühler (100) entfernt angeordnet ist.

6. Temperaturmeßfühler (100) mit:
einer Widerstandsschicht (104); und
einem Anschlußdraht (108) aus Nickel, der mit einer Kontaktstelle (106) verbunden ist und mit einer Fixierungsglasur (126) befestigt Ist, wobei zwischen dem Anschlußdraht (108) und der Fixierungsglasur (126) eine in einem separaten Schritt oberflächlich in einem Temperaturbereich von 600°C bis 900°C innerhalb einer Dauer von 5 Minuten bis 60 Minuten aufgebrachte Oxidschicht (122) angeordnet ist, wobei die Fixierungsglasur (126) die Oxidschicht (122) bedeckt.

## Claims

1. Method of contacting a temperature measurement sensing device (100), comprising the following steps:
securing a connecting wire (108) of nickel or a nickel alloy to a contact pad (106) of the temperature measurement sensing device (100);
in a further step superficially oxidizing the secured connecting wire (108); and
subsequently fixing the connecting wire (108) by means of a fixing glaze (126), wherein the portion of the oxidized connecting wire (108) secured at the contact pad (106) is covered by the fixing glaze (126).

2. Method of contacting a temperature measurement sensing device (100), comprising the following steps:
securing a connecting wire (120) to a contact pad (106) of the temperature measurement sensing device (100), wherein the connecting wire (120) is formed of nickel coated by a noble metal layer (116) or of a nickel alloy coated by a noble metal layer (116), wherein the nickel or the nickel alloy is exposed at an end face of the connecting wire (120);
in a further step superficially oxidizing the exposed end face of the secured connecting wire (108, 120); and
subsequently fixing the connecting wire (120) by means of a fixing glaze (126), wherein the oxidized end face of the connecting wire (120) is covered by the fixing glaze.

3. Method according to claim 2, wherein the noble metal layer (116) is made of platinum.

4. Method according to claim 1, wherein the nickel wire (108) is oxidized for 5 minutes to 60 minutes in a temperature range of 600°C to 900°C.

5. Method according to one of claims 1 to 4, comprising the following step: removing the oxide layer (122, 124) from the end of the connecting wire (108, 120) which is arranged distant from the temperature measurement sensing device (100).

6. Temperature measurement sensing device (100) comprising:
a resistor layer (104); and
a connecting wire (108) of nickel connected to a contact pad (106) and secured by a fixing glaze (126), wherein an oxide layer (122) is arranged between the connecting wire (108) and the fixing glaze (126), which oxid layer is applied superficially in a separate step within 5 minutes to 60 minutes in a temperature range of 600°C to 900°C, wherein the fixing glaze (126) covers the oxide layer (122).

## Revendications

1. Procédé de mise en contact d'un capteur de température (100), aux étapes suivantes consistant à :
fixer un fil de raccordement (108) en nickel ou un alliage de nickel à un point de contact (106) du capteur de température (100) ;
oxyder superficiellement le fil de raccordement fixé (108) dans un étape supplémentaire; et
ensuite fixer le fil de raccordement (108) au moyen d'un émail de fixation (126), le segment du fil de raccordement oxydé (108) fixé au point de contact (106) étant recouvert par l'émail de fixation (126).

2. Procédé de mise en contact d'un capteur de temperature (100), aux étapes suivantes consistant à :
fixer un fil de raccordement (120) à un point de contact (106) du capteur de température (100), le fil de raccordement (120) étant réalisé en nickel revêtu dune couche de métal précieux (116) ou en un alliage de nickel revêtu dune couche de métal précieux (116), le nickel ou l'alliage de nickel étant dégagé sur une face frontale du fil de raccordement (120) ;
oxyder superficiellement la face frontale dégagée du fil de raccordement fixé (108, 120) dans un étape supplémentaire; et
ensuite fixer le fil de raccordement (120) au moyen d'un émail de fixation (126), la face frontale oxydée du fil de raccordement (120) étant recouverte par l'émail de fixation.

3. Procédé selon la revendication 2, dans lequel la couche de metal précieux (116) est en platine.

4. Procédé selon la revendications 1, dans lequel le fil de nickel (108) est oxydé dans une plage de temperatures de 600°C à 900°C pendant une durée de 5 minutes à 60 minutes.

5. Procédé selon l'une des revendications 1 à 4, à l'étape suivante consistant à:
éliminer la couche d'oxyde (122, 124) de l'ex-trémité du fil de raccordement (108, 120) qui disposée éloignée du capteur de température (100)

6. Capteur de température (100), avec :
une couche de résistance (104) ; et
un fil de raccordement (108) en nickel, qui est connecté à un point de contact (106) et fixé à l'aide d'un email de fixation (126), entre le fil de raccordement (108) et l'émail de fixation (126) étant disposée une couche d'oxyde (122), la couche d'oxyde (122) est appliqué superficiellement dans un étape particulière et dans une plage de temperatures de 600°C à 900°C pendant une durée de 5 minutes à 60 minutes, l'émail de fixation (126) recouvrant la couche d'oxyde (122).
